Europäisches Patentamt

**European Patent Office**

Office européen des brevets

(19)

(11) Publication number:

**0 065 381**
A2

(12) **EUROPEAN PATENT APPLICATION**

(21) Application number: 82302289.2

(22) Date of filing: 05.05.82

(51) Int. Cl.³: **C 09 D 9/00**

(30) Priority: 08.05.81 AU 8767/81
17.09.81 AU 786/81

(43) Date of publication of application: 24.11.82
Bulletin 82/47

(84) Designated Contracting States: **AT BE CH DE FR GB IT LI LU NL SE**

(71) Applicant: **Shuttleworth, Norman Hodgson, 10, Glenn Avenue, Northmead New South Wales, 2152 (AU)**

(72) Inventor: **Shuttleworth, Norman Hodgson, 10, Glenn Avenue, Northmead New South Wales, 2152 (AU)**

(74) Representative: **Pennant, Pyers et al, Stevens, Hewlett & Perkins 5 Quality Court Chancery Lane, London, WC2A 1HZ (GB)**

(54) **Stripping agents.**

(57) There is disclosed herein compositions useful in the removal of paint and/or dye based marks and is particularly useful in the removal of graffiti from various substrates such as bricks, tiles and certain painted surfaces. The compositions comprise selected amounts of a member of components which form clear homogeneous solutions which are highly effective in the removal of paint and/or dye based marks. The solutions contain an ether, ester cresylic acid and various selected petroleum and/or hydrocarbon solvents together with a chlorinated hydrocarbon, a fatty acid and an alkaline component.

- 1 -

"STRIPPING AGENTS"

The present invention relates to stripping agents, especially useful in the removal of paint and agents incorporating one or more dyes.

The occurrence of graffiti, and other undesirable written material is a widespread social problem and the wide variety of materials which can be used to deface buildings, signs and other public utilities has caused a substantial problem in the removal of such.

Also, with a wide variety of writing and/or marking implements available to the public generally, there is the problem of removal of such when they are applied indiscriminately, for example when placed in the hands of children.

It is an object of the present invention to provide multi purpose compositions which can be used to substantially remove a wide variety of paint and/or dye based marks from a number of materials.

Another object of a preferred embodiment of the present invention is to provide such compositions having a substantially nil flashpoint (closed cup flashpoint test).

The closest art of which the applicant is aware is German Patent No. 2927968 in the name of Tegee-Chemie Tietjen & Gehrke which discloses a combination of a chlorinated hydrocarbon, for example methylene chloride, an aromatic hydrocarbon, for example toluene, a ketone, for example cyclohexone, a lower alcohol, for example methanol, a higher alcohol, for example benzyl alcohol, a swelling agent, such as carboxymethylcellulose, a wetting agent, and an alkaline solution. A major proportion of the solution is the chlorinated hydrocarbon. U.K. Patent No. 1 487 737 in the name of National Research Development Corporation discloses a paint removing composition or aerosol type paint in the form of a gel which comprises as active ingredients an organic solvent comprising one or more compounds containing an ester functional group, such as ethyl acetate, iso/n-propylacetate, iso/n-butylacetate or amylacetate, and one or more compounds containing both an ether and an alcohol functional group such as 2-(2-butoxyethoxy) ethylacetate, together with a gelling agent having both water and organic solvent solubility such as hydroxypropylcellulose, and a surface active agent which aids the formation of an oil in water emulsion, particularly cationic and non-ionic surfactants, e.g. Triton 100.

French Patent 2390484 in the name of Lerner Otto - Serfac discloses removal compositions which contain methylene chloride and methanol and which may also contain methylhydroxypropylcellulose, and/or an emulsifier such as sodium lauryl sulfate. German Patent No. 1276849 discloses solutions containing methylene chloride, methanol, methyl-benzylalcohol, methylbenzyl alcohol, ethylbenzene, 1,2,dichloroethylene, thiourea, paraffin, methylcellulose and water.

United States Patent No. 2,495,729 discloses a cleaning method utilising compositions containing cellulose acetate in acetone, paraffin wax, carbon tetrachloride, ethylenedichloride, propyl butyl alcohol, and ethyl acetate.

Much of the art is summarised by Joseph Mazia in two articles in Metal Finishing, July 1979 and August 1979 at pages 57 to 61 and 39 to 43, respectively.

None of the above references disclose compositions which have the particular combination of components in selected amounts are described herein and which show the remarkable removal properties exhibited by the compositions.

The present inventor has developed formulations which exhibit unexpectedly superior results to known paint stripping compositions. The particular combination of components in the selected amounts exhibit surprisingly effective broad spectrum results in the removal of the common forms of graffiti. Although the compositions have been broadly described in so far as the amounts of components within the formulation, it has been generally found that only selected combinations of the amounts of the components will yield clear, homogenous solutions which exhibit superior stripping or removal properties.

It was found that a combination of an ether such as ethylene glycol monoethyl or monoethyl ether, and a

- 3 -

substituted hydrocarbon solvent, in particular xylene, together with certain solvents such as distillate and/or ethyl, isobutyl or butyl acetate exhibited a possible synergism in the removal of paint and/or dye based marks. However the flashpoint of such a composition was unsatisfactory. Also, although the composition did yield satisfactory results the broad spectrum results which are achieved by the compositions as hereinafter described were not evident.

Although various multipurpose compositions fall within the scope of the present invention which yield results in the removal of a broad spectrum of paint and/or dye based marks, generally, it has been found that a composition suitable for spray paint removal will have a different formulation to a remover suitable for the removal of spirit dyes and the like, such as pentel pen and textacolour.

In one form of the present invention there is provided a composition comprising:

i. from 0 to 30% by volume of an ester of a $C_1$-$C_6$ alcohol with a $C_1$-$C_6$ acid, preferably butyl acetate or ethyl acetate;

ii. from 5 to 40% by volume of an ether, preferably ethylene glycol monoethyl ether or ethylene glycol monomethyl ether such as those marketed under the trade name of Oxitol (Shell Australia) or Cellosolve;

iii. from 0 to 10% by volume of a cresol cresylic acid;

iv. from 2 to 20% by volume of a petroleum solvent such as distillate (Mobil Australia) (No. 2 Heating Oil) and/or kerosene;

v. from 10 to 40% by volume of an halogenated hydrocarbon solvent, preferably a chlorinated hydrocarbon such as methylene chloride or trichloroethane;

vi. from 0 to 15% by volume of a naphtha, preferably mineral turpentine or the like;

vii. from 2 to 20% by volume of a substituted or unsubstituted benzene solvent, preferably a dialkyl substituted benzene, preferably xylene such as that marketed under the trade name of Xylol (Shell Australia);

    viii.   from 0 to 5% by volume of a saturated or unsaturated fatty acid, preferably oleic acid;

    ix.   from 0 to 15% by volume of an aromatic petroleum oil, such as that marketed under the trade name of Certrex 47 (Mobil Australia); and

    x.   from 0 to 20% by volume of a ketone or aldehyde solvent such as methyl isobutyl ketone, methyl butyl ketone or methyl ethyl ketone;

    xi.   a variable amount of an alkali such as sodium and/or potassium hydroxide solution, depending on the solubility of the solute in the composition. Preferably from 0.5 to 6% by volume of potassium hydroxide and/or sodium hydroxide (50% solution) is used;

    xii.   from 0 to 5% by volume of wood oil such as pine oil,

    xiii.   up to about 3% of a nonionic surfactant such as Nonidet P/40;

    xiv.   from 0 to 10%, preferably 4 to 8% by volume of an halogenated benzene solvent such as orthodichlorbenzene;

    xv.   from 0 to 10% by volume of a $C_1$-$C_6$ alcohol.

It has been found that components of the above composition can be varied in the given ranges for particular applications.

In a preferred form of the invention there is provided a composition which is suitable to remove paints, and particularly dye based materials such as texta colour and ink and other stains from a variety of surfaces. It is not recommended for use on water based paint surfaces. In accordance with this embodiment of the invention there is provided a composition comprising:

    i.   from 10 to 25% by volume, preferably about 15%, of an ester of a $C_1$-$C_6$ alcohol with a $C_1$-$C_6$ acid preferably butyl acetate or ethyl acetate ;

    ii.   from 1 to 5% by volume of a cresol or

- 5 -

cresylic acid, preferably about 2 to 3%;

iii.   from 0 to 20%, preferably about 6 to 12%, by volume of a petroleum solvent, preferably distillate (No. 2 Heating Oil) and/or kerosene, preferably distillate and kerosene in a ratio of about 1:1;

iv.   from 5 to 15%, preferably about 10%, by volume of an ether, preferably ethylene glycol monomethyl ether;

v.   from 2 to 20%, preferably about 8%, by volume of a substituted benzene, preferably a dialkyl substituted benzene such as xylene;

vi.   from 2 to 20%, preferably about 5 to 15% by volume of a naphtha preferably mineral turpentine or its equivalent;

vii.   from 0 to 10%, preferably about 5%, by volume of methyl isobutylketone or methyl ethyl ketone;

viii.   from 0 to 3%, preferably about 1% to 2%, by volume of a surfactant, preferably nonionic such as that marketed under the trade name Nonidet P/40;

ix.   from 0.5 to 5%, preferably about 1%, by volume of a saturated or unsaturated fatty acid, preferably oleic acid;

x.   from 2 to 15%, preferably about 2 to 6% by volume of a substantially aromatic solvent (at least about 60% aromatic content) such as an aromatic petroleum oil such as that marketed under the trade name of Certrex 47; and

xi.   from 3 to 10%, preferably about 6% of an halogenated benzene, preferably orthodichlorbenzene (ODCB);

xii.   from 10 to 40%, preferably about 15 to 30%, by volume of a halogenated hydrocarbon, preferably chlorinated hydrocarbon such as methylene chloride or trichloroethane (1, 1, 1), preferably a combination of trichloroethane and methylene chloride, more preferably in a weight ratio of about 2:1 respectively; and

xiii.   from 0 to 3% by volume of pine oil

xiv.   from 0 to 10% by volume of $C_1$-$C_6$ alcohol such as methanol and/or ethanol

xv.   a variable amount of an alkali such as potassium hydroxide or sodium hydroxide depending on the solubility of the solute in the composition. Preferably about 1 to 2% by volume of a 50% solution of KOH is used.

Another preferred form of the invention provides a composition which is especially useful in the removal of spray paint. This composition does not provide the broad spectrum results of the above described embodiment but is a useful alternative to remove the most prevalent from of graffiti applied by means of spray paint. In this embodiment there is provided a composition comprising:

i.     from 20 to 50%, preferably about 36 to 40%, by volume of an ether, preferably ethylene glycol monoethyl ether or ethylene glycol monomethyl ether;

ii.    from 2 to 10%, preferably about 3 to 6%, by volume of a naphtha such as mineral turpentine;

iii.   from 2 to 20%, preferably about 5 to 7%, by volume of a substituted benzene preferably a disubstituted benzene such as xylene;

iv.    from 0 to 20%, preferably about 6%, by volume of a ketone solvent such as methyl ethyl ketone or methyl isobutyl ketone;

v.     from 0 to 5%, preferably about 1.5%, by volume of a surfactant, preferably nonionic, such as Nonidet P/40;

vi.    from 0 to 5%, preferably up to about 2%, by volume of an unsaturated or saturated fatty acid preferably an oleic acid;

vii.   from 0 to 10%, preferably up to about 3%, by volume of a cresol or cresylic acid;

viii.  from 2 to 10%, preferably about 2 to 6%, by volume of an aromatic petroleum oil such as that marketed under the trade name of Certrex 47;

ix.    from 2 to 10%, preferably about 2 to 6%, by volume of a petroleum solvent such as distillate (No. 2 Heating Oil);

x.     from 10 to 30%, preferably about 16%, by volume of a chlorinated hydrocarbon, preferably methylene chloride and/or trichloroethane, and preferably in a ratio of methylene chloride to trichloroethane of from 3:1 to 1:2, preferably about 1.5:1;

xi.    from 0 to 10%, preferably about 5% by volume of a $C_1$-$C_6$ alcohol for example methanol and/or ethanol;

xii.    up to about 3% by volume of pine oil, preferably about 1 to 2%; and

xiii.   a variable amount of an alkali such as a solution of potassium and/or sodium hydroxide, preferably from 1 to 10%, preferably about 6% to 9% by volume of a 50% solution.

The present invention will be further described by way of example only in the following examples.

EXAMPLE 1

| Oxitol (Ethylene glycol monoethyl ether B.P. $133^{\circ}$-$137^{\circ}$C, Shell Australia) | 10% |
|---|---|
| Butyl Acetate | 15% |
| Mineral Turpentine | 6% |
| Xylene (B.P. $138^{\circ}$-$143^{\circ}$C, Shell Australia) | 5% |
| Kerosene | 5% |
| Nonidet P/40 | 1% |
| Oleic Acid | 1% |
| Cresylic Acid (Mixed cresol B.P. $195^{\circ}$-$201^{\circ}$C) | 3% |
| Distillate (Mobil Australia) | 10.5% |
| Certrex 47 (85% aromatic, Mobil Australia) | 11% |
| Trichloroethane (1,1,1) | 21% |
| Methylene Chloride | 10% |
| Potassium Hydroxide (50% solution) | 1.5% |

The above proportions are specified on a volume basis. It should be clear to the person skilled in the art that the mixing procedure will depend on the proportions of the various components to ensure a homogeneous solution. The above solution was found to be a particularly effective broad spectrum stripper.

- 8 -

EXAMPLE 2

| Oxitol | 35% |
| Mineral Turps | 8% |
| Butyl Acetate | 5% |
| Xylene | 10% |
| Methyl Isobutyl Ketone | 6% |
| Nonidet P/40 | 1.5% |
| Cresylic Acid | 3% |
| Certrex 47 | 4.5% |
| Distillate | 4% |
| Methylene Chloride | 16% |
| KOH (50%) | 3% |
| NaOH (50%) | .3% |

The above solution was found extremely efficient in removing spray paint from concrete, bricks and tiles.

EXAMPLE 3

The composition described below has been found to be particularly efficient in the removal of gum or adhesive residues, e.g. chewing gum.

| MIBK | 8.3% |
| Oxitol | 19.2% |
| Butyl Acetate | 10% |
| Mineral Turpentine | 4% |
| Pine Oil | 8.3% |
| Ortho Di Chlor Benzene | 4.2% |
| Xylene | 3.3% |
| Kerosene | 3.3% |
| Nonidet P/40 | 0.7% |
| Oleic Acid | 0.7% |
| Cresylic Acid | 2% |
| Distillate | 7% |
| Certrex 47 | 7.3% |
| Chloroethane | 14% |
| Methylene Chloride | 6.7% |
| KOH (50% solution) | 1% |
| | 100.00% |

- 9 -

### EXAMPLE 4

| | | |
|---|---|---|
| 1) | Butyl Acetate | 26.5% |
| 2) | Methylated Spirits | 5.5% |
| 3) | Oxitol | 8.5% |
| 4) | Methyl Iso Butyl Ketone | 1.5% |
| 5) | Xylene | 7.0% |
| 6) | Mineral Turps | 1.5% |
| 7) | Oleic Acid | 2.0% |
| 8) | Ortho Di Chlor Benzene | 16.5% |
| 9) | Cresylic Acid | 5.5% |
| 10) | Certrex 47 | 9.0% |
| 11) | Distillate | 15.0% |
| 12) | Potassium Hydroxide (50% solution) | .1.5% |
| | | 100.00% |

### EXAMPLE 5

| | |
|---|---|
| Formulation of Example 4 | 75% |
| Oxitol | 15% |
| M.I.B.K. | 0.8% |
| Kerosens (household) | 4% |
| Pine Oil (Chinese) | 5% |
| Nonidet P/40 | 0.2% |
| | 100.00% |

The above two solutions (Examples 4 and 5) were found to be particularly suitable to remove a wide variety of paint and/or dye marks from surfaces such as concrete, vinyl, glass and bricks. Use on water based paint surfaces is not recommended.

### EXAMPLE 6

| | | |
|---|---|---|
| 1) | Oxitol | 30% |
| 2) | Methylated Spirit | 8% |
| 3) | Butyl Acetate | 6% |
| 4) | M.I.B.K. | 12% |
| 5) | Xylene | 12% |
| 6) | Oleic Acid | 1.5% |
| 7) | O.D.C.B. | 6% |
| 8) | Cresylic Acid | 3% |
| 9) | Certrex 47 | 4% |

- 10 -

| 10) | Pine Oil | 2.5% |
| 11) | Potassium Hydroxide (50% solution) | 15% |
| | | 100.00% |

## MIXING PROCEDURE FOR EXAMPLES 4, 5 and 6

Blend ingredients 1 to 6 for approximately 2 minutes. Blend in 7 for approximately 5 minutes and then follow up to 11. 12 should be added gradually over a period of 5 minutes. For batches over 1000 litres these time periods should be increased and agitating means provided to ensure a complete blending at each stage.

## EXAMPLE 7

The solution below gave broad spectrum results in the removal of a number of dye and/or paint based marks from various substrates such as bricks, tiles, concrete, etc. The solution is not recommended for water based paint substrates.

| Oxitol | 10% |
| Butyl Acetate | 20% |
| Mineral Turps (wood distilled turpentine) | 5% |
| Xylene | 8% |
| Ortho Di Chlor Benzene | 6% |
| Oleic Acid | 1% |
| Cresylic Acid | 3% |
| Certrex 47 | 5% |
| Distillate | 4.5% |
| Chlorothene | 20% |
| Kerosene | 5% |
| Nonidet P/40 | 1% |
| Methylene Chloride | 10% |
| Potassium Hydroxide (50% solution) | 1.5% |

The above proportions are specified on a volume basis.

## EXAMPLE 8

The following solution was prepared and was found to be extremely successful in the removal of spray paint from concrete bricks and tiles, and the like.

| Oxitol | 385 ml |
|---|---|
| Methylisobutylketone | 60 ml |
| Xylene | 50 ml |
| Mineral Turps (wood distilled turpentine) | 60 ml |
| Certrex 47 | 60 ml |
| Distillate (No.2 Heating Oil) | 60 ml |
| Nonidet P/40 | 15 ml |
| Chlorothene | 100 ml |
| Methylene Chloride | 150 ml |
| Potassium Hydroxide (50% solution) | 30 ml |
| Sodium Hydroxide (50% solution) | 30 ml |
| | 1000 ml |

It should be understood that the above solutions should result in substantially clear homogenous solution. Accordingly, the mixing procedure is important to ensure that such a solution will result. The mixing procedure for the above four examples is substantially similar to the mixing procedure for Examples 4, 5 and 6. Examples 1,2 and 7,8 exhibited substantially nil flash points which is desirable for solutions of this kind.

It will be clear to the skilled person in the art that various equivalents of the compounds referred to herein may be used without departing from the broad scope of the present invention. For example, turpentine is a mixture of a number of solvents resulting from the distillation of crude oil or wood. Mineral turpentine has a boiling range of 150 to 200$^{\circ}$C and comprises about 40% by weight of paraffinic hydrocarbons, about 12% by weight of naphthenic hydrocarbons and about 40% by weight of aromatic hydrocarbons. Therefore, it is possible to use analogous solvents to obtain the same solubility and boiling range of mineral turpentine. It has been found that mineral turpentine and wood distilled turpentine exhibit substantially analogous properties within the compositions of the present invention.

In another example, distillate is another distillation product and may be replaced by No.2 heating oil.

0065381

- 12 -

The surfactant Nonidet P/40 has been found particularly suitable in the process of the present invention but other nonionic surfactants may also be substituted. Various amides of fatty acids, polyethylene oxide condensates of alcohol phenyls, esters from the reaction of fatty acids with polyhydric alcohols, condensation products of aliphatic alcohol with ethylene oxide, etc. may all be suitable as surfactants in the composition of the present invention.

The aromatic solvent such as Certrex 47 may be replaced by various aromatic solvents having at least a 60% aromatics content.

It should also be undertood that the compositions of the present invention may have foaming agents or gelling agents added thereto which are compatible with the composition for ease of application. The above examples give solutions which are suitable for spraying or painting on the marked area and are generally washed or sponged off depending on the circumstances. Gelling or foaming of the solutions may provide a more controlled means of applying the compositions.

0065381

- 13 -

CLAIMS

1.    A paint or dye removing composition comprising:

i.    from 0 to 30% by volume of an ester of a $C_1$-$C_6$ alcohol with a $C_1$-$C_6$ acid;

ii.    from 5 to 40% by volume of an ether, such as ethylene glycol monoethyl ether or ethylene glycol monomethyl ether ;

iii.    from 0 to 10% by volume of cresylic acid;

iv.    from 2 to 20% by volume of a petroleum solvent such as distillate (No. 2 Heating Oil) and/or kerosene;

v.    from 10 to 40% by volume of an halogenated hydrocarbon solvent,;

vi.    from 0 to 15% by volume of a naphtha;

vii.    from 2 to 20% by volume of a substituted or unsubstituted benzene solvent;

viii.    from 0 to 5% by volume of a saturated or unsaturated fatty acid;

ix.    from 0 to 15% by volume of an aromatic petroleum oil;

x.    from 0 to 20% by volume of a ketone or aldehyde solvent;

xi.    up to about 3% by volume of a nonionic surfactant;

xii.    a variable amount of an alkali such as sodium and/or potassium hydroxide solution, depending on the solubility of the solute in the composition, and

xiii.    from 0 to 5% by volume of wood oil such as pine oil.

2.    A paint or dye removing composition comprising:

i.    from about 0 to 30% by volume of butyl acetate or ethyl acetate;

ii.    from 5 to 40% by volume of ethylene glycolmonoethyl ether or ethylene glycol monomethylether;

iii.    from 0 to 10% by volume of cresylic acid;

iv.    from 2 to 20% by volume of distillate and/or kerosene;

v.    from 10 to 40% by volume of methylenechloride

- 14 -

and/or trichloroethane;

      vi.    from 0 to 15% by volume of mineral turpentine;

      vii.   from 2 to 20% by volume of xylene;

      viii.  from 0 to 5% by volume of oleic acid;

      ix.    from 0 to 15% by volume of an aromatic petroleum oil;

      x.     from 0 to 20% by volume of methylisobutylketone, or methylethylketone;

      xi.    up to about 3% by volume of a nonionic surfactant;

      xii.   up to about 3% by volume of pine oil;

      xiii.  from 0.5 to 5% by volume of potassium hydroxide and/or sodium hydroxide as about a 50% solution.

3.      A composition particularly suitable for the removal of paint and/or dye based materials comprising:

      i.     from 10 to 25% by volume of an ester of $C_1$-$C_6$ acid with a $C_1$-$C_6$ alcohol;

      ii.    from 1 to 5% by volume of cresylic acid;

      iii.   from 0 to 20% by volume of a petroleum solvent;

      iv.    from 5 to 15% by volume of an ether;

      v.     from 2 to 20% by volume of an alcohol substituted benzene;

      vi.    from 2 to 20% by volume of mineral turpentine;

      vii.   from 0 to 10% by volume of kerosene;

      viii.  from 0 to 3% by volume of a nonionic surfactant;

      ix.    from 0.5 to 5% by volume of a saturated or unsaturated fatty acid;

      x.     from 2 to 15% by volume of an aromatic petroleum oil;

      xi.    from 3 to 10% by volume of an halogenated benzene;

      xii.   from 10 to 40% by volume of an halogenated hydrocarbon;

      xiii.  from about 1 to 3% by volume of a 50% solution of potassium or sodium hydroxide; and

      xiv.  from 0 to 3% by volume of pine oil;

- 15 -

4.      The composition as claimed in claim 3 comprising:

     i.      about 4 to 20% by volume of butyl acetate;

     ii.     about 2 to 3% by volume of cresylic acid;

     iii.    from about 0 to 12% by volume of distillate
and kerosene in the ratio of about 1:1;

     iv.     about 10 to 15% by volume of ethylene glycol
monomethylether;

     v.      about 8% by volume of xylene;

     vi.     about 5 to 6% by volume of mineral turpentine;

     vii.    about 5% by volume of kerosene;

     viii.   about 1 to 2% by volume of a nonionic
surfactant;

     ix.     about 1% by volume of oleic acid;

     x.      about 5 to 6% by volume of an aromatic
petroleum oil;

     xi.     about 30% by volume of dichloroethane and
methylene chloride in a weight ratio of about 2:1
respectively;

     xii.    about 6% by volume of orthodichlorbenzene;

     xiii.   about 1 to 2% by volume of a 50% solution of
sodium and/or potassium hydroxide.

5.      A composition suitable for the removal of spray
paint from a variety of substrates, said composition
comprising:

     i.      from about 20 to 50% by volume of an ether;

     ii.     from about 3 to 15% by volume of a naptha
such as mineral turpentine;

     iii.    from about 2 to 20% by volume of a
substituted benzene;

     iv.     from about 2 to 20% by volume of a ketone
solvent;

     v.      from 0 to 5% by volume of a nonionic
surfactant;

     vi.     from 0 to 5% by volume of an unsaturated or
saturated fatty acid;

     vii.    from 0 to 10% by volume of cresylic acid;

     viii.   from 2 to 10% by volume of an aromatic
petroleum oil;

ix.     from about 2 to 10% by volume of a petroleum solvent such as distillate;

x.      from about 10 to 30% by volume of a chlorinated hydrocarbon;

xi.     from about 3 to 9% by volume of a 50% solution of potassium and/or sodium hydroxide.

6.      A composition as claimed in claim 5 comprising:

i.      about 36 to 40% by volume of ethylene glycol monoethylether or ethylene glycol monomethyl ether;

ii.     about 6% by volume of mineral turpentine;

iii.    about 5% by volume of xylene;

iv.     about 6% by volume of methylethyl ketone or methylisobutyl ketone;

v.      about 1.5% by volume of a nonionic surfactant;

vi.     about 6% by volume of an aromatic petroleum oil having at least an 80% aromatic content;

vii.    about 6% by volume of a distillate or No. 2 heating oil;

viii.   about 10% by volume of chlorothene;

ix.     about 15% by volume of methylene chloride;

x.      about 6% by volume of a 50% solution of potassium and/or sodium hydroxide.

7.      A composition comprising:

i.      about 20% by volume of butyl acetate;

ii.     about 10% by volume of ethylene glycol monoethyl ether;

iii.    about 8% by volume of xylene;

iv.     about 5% by volume of mineral turpentine or wood distilled turpentine;

v.      about 1% by volume of oleic acid;

vi.     about 6% by volume of orthodichlorbenzene;

vii.    about 3% by volume of cresylic acid;

viii.   about 5% by volume of an aromatic petroleum oil having at least an 80% aromatic content;

ix.     about 4.5% by volume of No. 2 heating oil;

x.      about 1% by volume of a nonionic surfactant;

xi.     about 5% by volume of kerosene;

xii.    about 20% by volume of chlorothene;

- 17 -

      xiii.   about 10% by volume of methylene chloride;

      xvi.   about 1.5% by volume of a 50% solution of potassium hydroxide and/or sodium hydroxide.

8.      A composition comprising:

      i.   about 38.5% by volume of ethylene glycol monomethyl ether;

      ii.   about 6% by volume of methylisobutyl ketone;

      iii.   about 5% by volume of xylene;

      iv.   about 6% by volume of naphtha such as mineral turpentine;

      v.   about 6% by volume of an aromatic petroleum oil;

      vi.   about 6% by volume of No. 2 heating oil;

      vii.   about 10% by volume of chlorothene;

      viii.   about 15% by volume of methylene chloride;

      ix.   about 6% by volume of a 50% solution of potassium and/or sodium hydroxide.

9.      A composition substantially as hereinbefore described with reference to the Examples.